Europäisches Patentamt

European Patent Office

Office européen des brevets

(11) Numéro de publication: **0 187 073**
A1

## (12) DEMANDE DE BREVET EUROPEEN

(21) Numéro de dépôt: 85402335.5

(22) Date de dépôt: 28.11.85

(51) Int. Cl.⁴: **G 11 B 27/10,** G 11 B 17/00, G 11 B 15/00, G 11 B 31/00, G 09 B 5/06, G 11 B 27/02

(30) Priorité: 28.11.84 FR 8418122

(71) Demandeur: **Sorriaux, Pierre, 13, place Georges Braque, F-95100 Argenteuil (FR)**
Demandeur: **Daubigny, Robert, 51, quai de Halage, F-92500 Rueil Malmaison (FR)**

(43) Date de publication de la demande: 09.07.86 **Bulletin 86/28**

(72) Inventeur: **Sorriaux, Pierre, 13, place Georges Braque, F-95100 Argenteuil (FR)**
Inventeur: **Daubigny, Robert, 51, quai de Halage, F-92500 Rueil Malmaison (FR)**

(84) Etats contractants désignés: **AT BE CH DE GB IT LI LU NL SE**

(74) Mandataire: **Levesque, Denys et al, Cabinet Beau de Loménie 55, rue d'Amsterdam, F-75008 Paris (FR)**

(54) Procédé de réalisation, à partir d'un vidéo-disque, de programmes audio-visuels et cassette mise en oeuvre dans ce procédé.

(57) L'invention concerne un procédé de réalisation de programmes audio-visuels à partir d'images mémorisées sur un vidéo-disque (9). La sélection des images désirées est effectuée, à partir d'un clavier (3a), à l'aide d'un mini-ordinateur (4) qui engendre les codes correspondant aux images choisies, sous une forme assimilable par un lecteur de vidéo-disques (1). La série de codes ainsi créée est enregistrée sur une cassette de magnétophone (8), conjointement avec un commentaire sonore. Pour reproduire un programme audio-visuel, il suffit de placer le vidéo-disque (9) dans un lecteur (1) et de le commander par la série de codes obtenue par lecture de la cassette (8).

ACTORUM AG

PROCEDE DE REALISATION, A PARTIR D'UN VIDEO-DISQUE, DE PROGRAMMES
AUDIO-VISUELS ET CASSETTE MISE EN OEUVRE DANS CE PROCEDE

La présente invention se rapporte à un procédé de
réalisation de programmes audiovisuels à partir d'une source
d'images mémorisées sur un support d'enregistrement tel qu'un
vidéo-disque ou une bande magnétique vidéo, les images, qui se
succèdent dans un ordre quelconque sur ce support, y étant
affectées de codes respectifs d'identification.

On sait que les supports d'enregistrement vidéo peuvent
contenir un nombre considérable d'images mémorisées. Ainsi, un
vidéo-disque du type institutionnel renferme 108 000 images. Le
choix des images, notamment celles que l'on désire utiliser dans
un programme audio-visuel déterminé, pose ainsi des problèmes
pratiques, qui ne peuvent habituellement être résolus que grâce à
l'usage d'un mini-ordinateur (ou d'un centre serveur) rendant
assimilables par l'appareil constituant la source d'images les
commandes de sélection d'images élaborées à partir d'un clavier.

L'invention a pour but de permettre à l'utilisateur d'une
source d'images, telle qu'un appareil à vidéo-disque, d'obtenir la
présentation de programmes audio-visuels variés sans avoir à
recourir à un mini-ordinateur ou à un centre serveur.

Le procédé selon l'invention consiste essentiellement,
dans une phase de préparation d'un programme audio-visuel, à
commander la génération successive des codes correspondant aux
images ou séquences d'images que doit comporter le programme
audio-visuel, dans l'ordre désiré et avec les intervalles de temps
voulus, et à mémoriser la série de codes ainsi créée sur un
support d'enregistrement audio, puis, dans une phase de
présentation du programme, à lire le support d'enregistrement
audio ainsi préparé et à appliquer la série de codes mémorisée à
la source d'images de façon à déclencher l'émission par celle-ci
des images et séquences d'imges correspondantes vers un appareil
de visualisation.

Ainsi, suivant ce procédé, la série de codes formée lors de
la préparation du programme audio-visuel est enregistrée; il suffit ensuite, pour obtenir la restitution dudit programme, de commander la source d'images par un appareil de lecture du support d'enregistrement qui contient la série de codes sous une forme assimilable par la source d'images, ledit appareil de lecture - tout simple - se substituant au mini-ordinateur ou au centre serveur qui serait autrement indispensable.

Conformément à ce qui précède, il convient d'effectuer, dans la phase de préparation, la génération des codes d'identification d'images par l'intermédiaire d'un mini-ordinateur (ou d'un centre serveur privé) doté d'un programme informatique de gestion et de codage d'accès à la source d'images utilisée.

La série de codes engendrée dans cette phase peut être mémorisée sur le support d'enregistrement audio conjointement avec un message sonore destiné à accompagner la présentation des images du programme audio-visuel. Il peut s'agir d'un commentaire, de séquences musicales d'accompagnement, de bruitages, etc. Le message sonore peut être enregistré soit avant, soit pendant, soit après l'enregistrement des codes d'images.

Des textes peuvent également être mémorisés sur le support d'enregistrement audio, qui sont destinés à être restitués, lors de la présentation des images du programme, par l'appareil de visualisation en incrustation ou non sur les images, suivant des codes spéciaux d'incrustation qui peuvent être mémorisés avec les textes.

Par ailleurs, d'autres codes complémentaires peuvent être mémorisés sur le support d'enregistrement audio, pour déclencher la commande d'organes périphériques lors de la présentation du programme (commande d'une imprimante délivrant les textes sous forme de documents matériels, commande de l'installation d'éclairage de la salle, etc).

Dans une forme de réalisation avantageuse, le support d'enregistrement audio est une bande magnétique, et de préférence celle que contient une cassette de type usuel. Dans un tel cas, la série de codes d'images et les autres codes éventuels peuvent être mémorisés sur une première piste de la bande magnétique, et le message sonore sur une deuxième piste adjacente.

Ainsi, le procédé selon l'invention conduit à la création d'une cassette de magnétophone destinée à accompagner un support d'images enregistrées, en particulier un vidéo-disque, et contenant au moins une série de codes de sélection d'images permettant d'extraire dudit support, dans l'ordre et aux moments voulus, les images correspondant à un programme audio-visuel déterminé.

On voit que le procédé permet l'exploitation d'un support d'images tel qu'un vidéo-disque, au moyen d'un élément aussi simple et peu coûteux qu'une cassette de magnétophone. Il devient donc possible d'obtenir la présentation d'un grand nombre de programmes préparés, et cela pour une faible dépense, en particulier à partir d'un vidéo-disque qui se trouve ainsi valorisé, son usage ne nécessitant plus de coûteux appareillages informatiques pour la génération des codes de sélection d'images. En outre, le message sonore enregistré ajoute le son aux images d'un vidéo-disque, celui-ci ne permettant généralement pas l'enregistrement sonore.

D'autres caractéristiques et avantages de l'invention ressortiront plus clairement de la description qui va suivre, en regard des dessins annexés, d'un exemple de réalisation non limitatif.

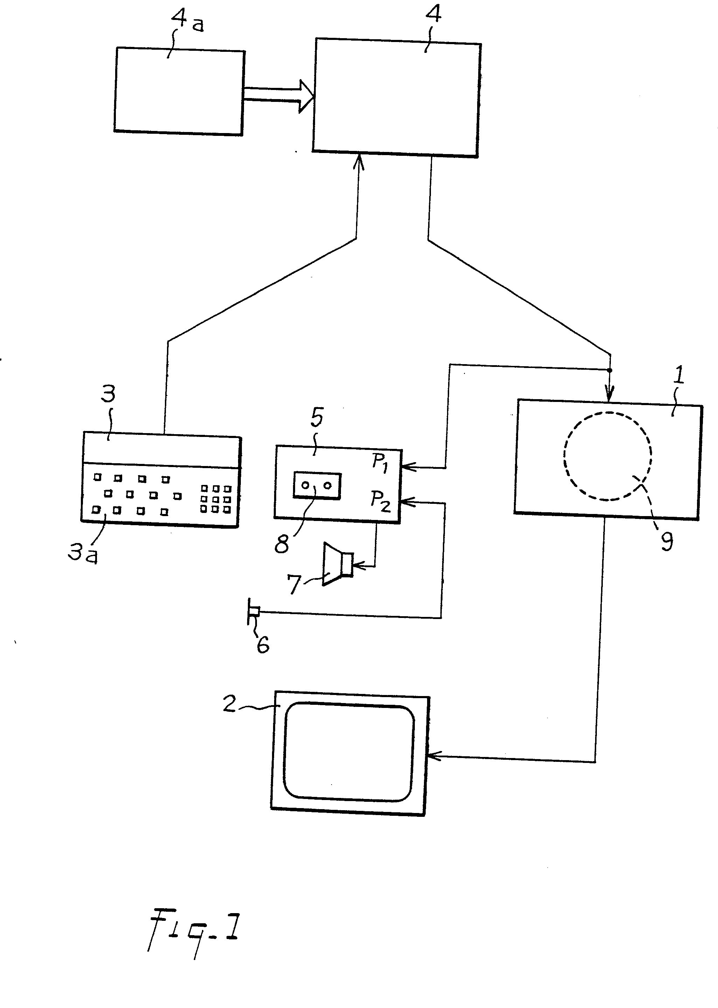

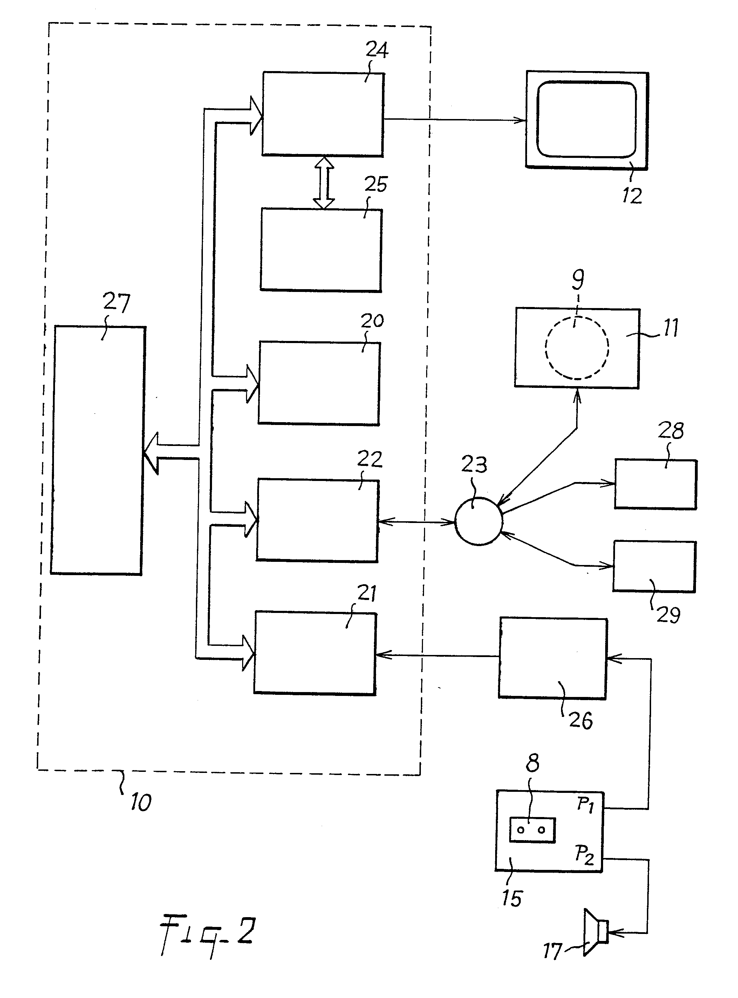

Les figures 1 et 2 illustrent schématiquement la mise en oeuvre du procédé selon l'invention, respectivement dans la phase de préparation et dans la phase de présentation d'un programme audio-visuel.

On voit sur la figure 1 un lecteur de vidéo-disque 1 de type "institutionnel", qui permet de lire et d'appliquer à un moniteur vidéo en couleur 2 les 2 x 54 000 images que comporte un vidéo-disque. Sur celui-ci, les images à observer individuellement (images fixes) et les groupes d'images successives (séquences filmées) comportent une numérotation codée, qui permet de les sélectionner en vue de leur présentation sur un écran tel que celui du moniteur 2.

Pour réaliser un programme audiovisuel comportant des images individuelles et/ou des séquences d'images déterminées, dans un ordre déterminé, on utilise un dispositif de commande 3 équipé d'un clavier 3a. Par manipulation de ce clavier, on sélectionne les images et séquences désirées par l'intermédiaire d'un mini-ordinateur 4 doté d'un programme 4a de gestion et de codage d'accès à la source d'images que constitue le lecteur de vidéo-disque 1. Cette sélection se fait à l'aide d'un catalogue où sont répertoriées, avec leurs numéros, toutes les images mémorisées sur un vidéo-disque 9 déterminé. On envoie grâce au clavier 3a les numéros des images choisies, dans l'ordre voulu, au mini-ordinateur 4, qui effectue la traduction de ces numéros en langage d'accès au vidéo-disque et applique ainsi au lecteur 1 une série de codes informatiques correspondant aux numéros des images choisies.

Cette série de codes est mémorisée sur une cassette à bande magnétique 8 placée dans un enregistreur à cassette 5, lequel est connecté en parallèle avec le lecteur de vidéo-disque 1 et reçoit les messages émis par le mini-ordinateur 4 en direction dudit lecteur. L'émission de ces messages est commandée à partir du clavier 3a et mémorisée en temps réel par l'enregistreur 5 sur la bande de la cassette 8. Simultanément, un commentaire peut être enregistré, au moyen d'un micro 6, sur une piste P2 de la bande magnétique adjacente à la piste P1 où s'inscrivent les différents codes d'images issus du mini-ordinateur 4.

Durant la préparation du programme audiovisuel, les images sélectionnées apparaissent en temps réel sur l'écran du moniteur vidéo 2. En fait, cet appareil, ainsi que le lecteur de vidéo-disque 1, n'ont ici qu'une fonction de contrôle des images et ne sont nullement indispensables pour la mise en oeuvre du procédé.

Au cas où l'on aurait enregistré le commentaire (avec éventuellement un accompagnement musical) préalablement à la mémorisation des codes d'images, ce commentaire pourrait être reproduit par un haut-parleur 7 durant l'élaboration de la piste de codes P1.

On peut également, à l'aide du clavier 3a, soit composer des textes, soit déclencher l'émission de textes mis préalablement en mémoire dans le mini-ordinateur 4, ces textes étant enregistrés sous forme codée (Vidéotext aux normes Télétel en France ou à d'autres normes à l'étranger) sur la piste P1, accompagnés de codes commandant leur affichage avec ou sans incrustation relativement aux images du programme audio-visuel.

Un programme audio-visuel ainsi préparé peut ensuite être reproduit à partir du vidéo-disque 9 et de la cassette 8 contenant les codes des images sélectionnées pour ce programme, dans l'ordre voulu et avec les intervalles de temps désirés entre images et/ou séquences d'images. Il suffit pour cela (figure 2) d'introduire le vidéo-disque 9 et la cassette 8 dans des lecteurs 11, 15 appropriés. Le lecteur de cassette envoie les signaux sonores de la piste P2 sur un haut-parleur 17 et les signaux de codes d'images et de textes de la piste P1 sur un modem 26 attaquant un décodeur 10.

Le décodeur 10 comprend un microprocesseur 27 de gestion et de décodage, fonctionnant à l'aide d'une mémoire-programme 20, une interface entrée/sortie 21, recevant les signaux du modem 26, un modem 22 relié à une prise péri-informatique 23 sur laquelle est branché le lecteur de vidéo-disque 11, et un processeur vidéo 24 qui attaque un moniteur vidéo en couleur 12 et coordonne l'application à celui-ci des images et des textes.

Après sélection du programme audio-visuel désiré sur la cassette audio (qui peut en contenir un grand nombre), les pistes P1 et P2 sont lues conjointement. Tandis que le commentaire et les signaux d'illustration sonore sont restitués par le haut-parleur 17, les images correspondantes sont visualisées sur l'écran du moniteur vidéo 12, avec les textes éventuellement prévus (dont l'affichage est organisé par le processeur vidéo 24 auquel est couplé à cet effet une mémoire de page 25). Ces textes apparaissent soit isolément, soit en incrustation dans les images, suivant les ordres mémorisés dans la cassette 8.

A la prise péri-informatique 23 du décodeur 10 peut être

6          0187073

raccordée une imprimante 28 susceptible de fournir, en cas de besoin, certains des textes enregistrés sous forme de documents imprimés sur papier.

La prise 23 permet également l'usage d'un dispositif d'accès 29 n'autorisant le fonctionnement de l'ensemble de présentation de programmes que sur introduction d'une carte magnétique déterminée.

La commande d'autres appareillages peut encore être prévue en fonction des codes enregistrés dans la cassette 8. On citera à titre d'exemple la commande de l'extinction et de l'allumage de l'installation d'éclairage dans la salle où sont présentés les programmes audio-visuels.

Les applications du procédé selon l'invention sont sans limite : il permet la création de programmes audio-visuels sur des sujets variés à l'infini, aussi bien touristiques (exemple : présentation des monuments d'une région) que techniques (exemple : catalogue de pièces détachées, avec délivrance éventuelle de documents écrits précisant les opérations de montage et de démontage), médicaux, historiques, documentaires, ou dans le domaine de la formation professionnelle, des spectacles, etc.

## REVENDICATIONS

1. Procédé de réalisation de programmes audiovisuels à partir d'une source d'images mémorisées sur un support d'enregistrement tel qu'un vidéo-disque ou une bande magnétique vidéo, les images, qui se succèdent dans un ordre quelconque sur ce support, y étant affectées de codes respectifs d'identification,
caractérisé par le fait qu'il consiste, dans une phase de préparation du programme, à commander la génération successive des codes correspondant aux images ou séquences d'images que doit comporter le programme audio-visuel, dans l'ordre désiré et avec les intervalles de temps voulus, et à mémoriser la série de codes ainsi créée sur un support d'enregistrement audio, puis, dans une phase de présentation du programme, à lire le support d'enregistrement audio ainsi préparé et à appliquer la série de codes mémorisée à la source d'images de façon à déclencher l'émission par celle-ci des images et séquences d'images correspondantes vers un appareil de visualisation, tandis que des textes sont également mémorisés sur le support d'enregistrement audio, qui sont destinés à être restitués, lors de la présentation des images du programme, par l'appareil de visualisation (12) et/ou sous forme de documents imprimés.

2. Procédé selon la revendication 1, caractérisé par le fait que la génération des codes d'identification d'images s'effectue par l'intermédiaire d'un mini-ordinateur (4) doté d'un programme informatique (4a) de gestion et de codage d'accès à la source d'images utilisée.

3. Procédé selon la revendication 1 ou 2, caractérisé par le fait que la série de codes est mémorisée sur le support d'enregistrement audio conjointement avec un message sonore destiné à accompagner la présentation des images du programme audio-visuel.

4. Procédé selon la revendication 1, caractérisé par le fait qu'avec les textes sont mémorisés des codes spéciaux destinés à commander, lors de la présentation du programme, la visualisation des textes en incrustation ou non sur les images.

5. Procédé selon l'une quelconque des revendications 1 à 4, caractérisé par le fait que d'autres codes complémentaires sont mémorisés sur le support d'enregistrement audio, pour déclencher des commandes d'organes périphériques (28, 29) lors de la présentation du programme.

6. Procédé selon l'une quelconque des revendications 1 à 5, caractérisé par le fait que le support d'enregistrement audio est une bande magnétique.

7. Procédé selon la revendication 6, caractérisé par le fait que la bande magnétique est celle que contient une cassette (8) de type usuel.

8. Procédé selon la revendication 6 ou 7, caractérisé par le fait que la série de codes d'images et les autres codes éventuels sont mémorisés sur une première piste (P1) de la bande magnétique, et le message sonore sur une deuxième piste (P2) adjacente.

9. Cassette de magnétophone destinée à accompagner un support d'images enregistrées, en particulier un vidéo-disque (9), et contenant au moins une série de codes de sélection d'images permettant d'extraire dudit support, dans l'ordre et aux moments voulus, les images correspondant à un programme audio-visuel déterminé.

Fig.1

2/2

0187073

Fig-2

Office européen
des brevets

RAPPORT DE RECHERCHE EUROPEENNE

0187073

Numéro de la demande

EP 85 40 2335

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | JOURNAL OF THE SMPTE, vol. 78, no. 10, octobre 1969, pages 869-872, Scarsdale, GB; M.J. KULJIAN: "A random-access audio-picture retrieval system" * Page 869, colonne du milieu, lignes 11-15; page 872, colonne de gauche, chapitre: "Basic Video System Concepts" - colonne de droite, ligne 50 * | 1-3,5-7,9 | G 11 B 27/10 G 11 B 17/00 G 11 B 15/00 G 11 B 31/00 G 09 B 5/06 G 11 B 27/02 |
| | --- | | |
| A | FR-A-2 472 230 (DAGUISE et al.) * Page 4, ligne 29 - page 10, ligne 12 * | 1,2,6,7 | |
| | --- | | |
| A | PATENTS ABSTRACTS OF JAPAN, vol. 6, no. 147 (E-123) [1025], page 94 E 123, 6 août 1982; & JP - A - 57 69 983 (RICOH K.K.) 30.04.1982 * Résumé * | 1,3,6-9 | DOMAINES TECHNIQUES RECHERCHES (Int. Cl.4) |
| | --- | | G 11 B |
| A | WIRELESS WORLD, vol. 89, no. 1574, novembre 1983, pages 44-48, Sheepen Place, Olchester, GB; P. BARKER: "Video disc programming for interactive video" * En entier * | 1,4 | G 09 B 5/06 H 04 N |
| | --- /- | | |

Le présent rapport de recherche a été établi pour toutes les revendications

| Lieu de la recherche | Date d'achèvement de la recherche | Examinateur |
|---|---|---|
| LA HAYE | 10-03-1986 | DAALMANS F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82

0187073

Numero de la demande

EP 85 40 2335

Office européen
des brevets

**RAPPORT DE RECHERCHE EUROPEENNE**

| | **DOCUMENTS CONSIDERES COMME PERTINENTS** | | Page 2 | |
|---|---|---|---|---|
| Catégorie | Citation du document avec indication, en cas de besoin,<br>des parties pertinentes | Revendication<br>concernée | CLASSEMENT DE LA<br>DEMANDE (Int. Cl.4) | |
| A | IBM TECHNICAL DISCLOSURE<br>BULLETIN, vol. 26, no. 3B, Août<br>1983, pages 1487-1488, New York,<br>US; P.J. KENNEDY:<br>"Video-enhanced computer-aided<br>teaching system"<br>* En entier * | 1,4 | | |
| A | GB-A-2 064 260 (N.V. PHILIPS'<br>GLOEILAMPENFABRIEKEN)<br>* Page 1, lignes 90-104; page 3,<br>ligne 80 - page 4, ligne 72 * | 1,3,4 | | |
| A | GB-A-1 420 943 (CHELSEA<br>COLLEGE)<br>* Page 1, ligne 32 - page 2,<br>ligne 15; page 2, ligne 101 -<br>page 4, ligne 125 * | 1,3,6-<br>9 | | |
| A | US-A-4 032 897 (POOLEY)<br><br>* Colonne 3, ligne 22 - colonne<br>6, ligne 13 * | 1,3,5,<br>6,8 | DOMAINES TECHNIQUES<br>RECHERCHES (Int. Cl.4) | |
| A | THE BKSTS JOURNAL, vol. 65, no.<br>7, juillet 1983, pages 384-388,<br>Londres, GB; C. MARGADANT:<br>"Interfacing A-V equipment to<br>compact disc"<br>* En entier * | 1-3,8 | | |
| | --- -/- | | | |

Le présent rapport de recherche a été établi pour toutes les revendications

| Lieu de la recherche<br>LA HAYE | Date d'achèvement de la recherche<br>10-03-1986 | Examinateur<br>DAALMANS F.J. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

| **DOCUMENTS CONSIDERES COMME PERTINENTS** | | | Page   3 | |
|---|---|---|---|---|
| Catégorie | Citation du document avec indication, en cas de besoin, des parties pertinentes | Revendication concernée | CLASSEMENT DE LA DEMANDE (Int. Cl.4) | |
| A | GB-A-2 132 812  (SONY CORPORATION) * En entier * | 1,4,5 | | |
| A | PATENTS ABSTRACTS OF JAPAN, vol. 7, no. 262 (P-238) [1407], 22 novembre 1983, page 33 P 238; & JP - A - 58 143 478 (KONPIYUUTAA SERVICE K.K.) 26.08.1983 * Résumé * | 1 | | |
| | | | DOMAINES TECHNIQUES RECHERCHES (Int. Cl.4) | |

Le présent rapport de recherche a été établi pour toutes les revendications

| Lieu de la recherche | Date d'achèvement de la recherche | Examinateur |
|---|---|---|
| LA HAYE | 10-03-1986 | DAALMANS F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82